# EUROPÄISCHE PATENTSCHRIFT

(11) **EP 2 825 367 B1**
(45) Veröffentlichungstag und Bekanntmachung des Hinweises auf die Patenterteilung: **25.05.2016**
(21) Anmeldenummer: 13710397.4
(22) Anmeldetag: 15.03.2013
(51) Int. Cl.: B29C 65/06

(54) **VIBRATIONSSCHWEIßMASCHINE UND VERFAHREN ZUM BETREIBEN EINER VIBRATIONSSCHWEISSMASCHINE**
VIBRATION WELDING MACHINE AND METHOD FOR OPERATING A VIBRATION WELDING MACHINE
MACHINE DE SOUDAGE PAR VIBRATION ET PROCÉDÉ PERMETTANT DE FAIRE FONCTIONNER UNE MACHINE DE SOUDAGE PAR VIBRATION

(30) Priorität: 16.03.2012 DE 102012204188
(43) Veröffentlichungstag der Anmeldung: 21.01.2015
(73) Patentinhaber: bielomatik Leuze GmbH + Co. KG, 72639 Neuffen (DE)
(72) Erfinder: TRABANDT, Tim, 72639 Neuffen (DE); JAUCH, Michael, 72116 Mössingen (DE); KOCH, Thorsten, 72555 Metzingen (DE)
(74) Vertreter: Hoeger, Stellrecht & Partner Patentanwälte mbB
(86) Internationale Anmeldenummer: PCT/EP2013/055473
(87) Internationale Veröffentlichungsnummer: WO 2013/135893

(56) Entgegenhaltungen:
- EP-A2- 1 834 754
- DE-A1- 4 034 821
- US-A- 4 086 122
- US-A- 4 154 641

## Beschreibung

Die Erfindung betrifft eine Vibrationsschweißmaschine sowie ein Verfahren zum Betreiben einer solchen Vibrationsschweißmaschine gemäß den Merkmalen der jeweiligen Oberbegriffe der unabhängigen Patentansprüche.

Gattungsgemäße Verfahren und Maschinen sind in den Dokumenten US 4,086,122, DE 4034821, US 4154641 und EP 1 834 754 offenbart.

Es sind Vibrationsschweißmaschinen sowie Verfahren zum Betreiben solcher Vibrationsschweißmaschinen bekannt, die ein Oberwerkzeug und ein Unterwerkzeug aufweisen, wobei jeweils eines der beiden Werkzeuge jeweils ein Schweißteil aufnimmt, wobei die beiden Schweißteile im Bereich einer Fügezone mittels Vibrationsschweißen dauerhaft und unlösbar miteinander verbunden werden sollen. Die Schweißteile bestehen im Regelfall aus Kunststoff und können, falls erforderlich, neben dem Versetzen in eine Vibration auch erwärmt werden, um den Fügevorgang zu verbessern. Bei solchen Vibrationsschweißmaschinen wird eines der Werkzeuge, beispielsweise das Unterwerkzeug, feststehend angeordnet und das andere Werkzeug, beispielsweise das Oberwerkzeug, in Schwingung versetzt, sodass die Fügezonen der beiden Werkzeuge aneinanderreiben, dabei Hitze erzeugen und dadurch im Bereich dieser Fügezone dauerhaft zusammengefügt werden, wenn der Vibrationsschweißvorgang beendet ist. Der Aufbau solcher Vibrationsschweißmaschinen ist grundsätzlich bekannt, wobei diese bei der Serienherstellung von Bauteilen, die aus zumindest zwei Schweißteilen bestehen, bearbeitet werden. Insbesondere werden solche Vibrationsschweißmaschinen für die Serienherstellung von Bauteilen in großen Stückzahlen eingesetzt, wobei oftmals auch mehrere Vibrationsschweißmaschinen in einer Produktionshalle stehen.

Aufgrund der bewegten Teile kommt es dabei während des Fügevorganges zu einer Geräuschentwicklung, die für das Bedienpersonal von Nachteil ist. Um die Geräuschentwicklung zu reduzieren ist schon daran gedacht worden, die komplette Vibrationsschweißmaschine mit einer kompletten Schallschutzumhausung zu umgeben. Diese muss jedoch infolge der hohen Geräusche, insbesondere der hochfrequenten Geräusche, die beim Vibrationsschweißen entstehen, aufwändig ausgeführt sein, um die Geräuschentwicklung während des Vibrationsschweißens für das Bedienpersonal signifikant zu reduzieren. Außerdem hat eine solche Schallumhausung gerade bei der Serienherstellung von Bauteilen den Nachteil, dass sie immer wieder dann entfernt werden muss, wenn das eine Bauteil fertig zusammengefügt und zwei neue Schweißteile in die Maschine eingesetzt werden sollen. Außerdem sind solche dicken Schallschutzumhausungen, mit denen der entstehende Schall wirksam reduziert werden soll, kostenintensiv und nehmen einen hohen Bauraum ein.

Der Erfindung liegt daher die Aufgabe zugrunde, eine Vibrationsschweißmaschine sowie ein Verfahren zum Betreiben einer solchen Vibrationsschweißmaschine dahingehend zu verbessern, dass insbesondere während des Vibrationsschweißvorganges die dabei entstehenden Geräusche ohne großen Aufwand signifikant reduziert werden können.

Diese Aufgabe ist durch die Merkmale der unabhängigen Patentansprüche gelöst.

Erfindungsgemäß ist hinsichtlich der Vibrationsschweißmaschine vorgesehen, dass die Mittel zur Vibrationserzeugung als ein feststehender Oberträger und einem daran schwingbeweglich angeordneten Schwinger, der das Oberwerkzeug aufnimmt, ausgebildet sind, wobei weiterhin Mittel vorgesehen sind, die die sich in einem zwischen dem Oberträger und dem Schwinger gebildeten Luftspalt befindende Luft entfernen. Es hat sich herausgestellt, dass bei Vibrationsschweißmaschinen feststehende und schwingbewegliche Teile existieren, wobei das schwingbewegliche Teil relativ in Bezug auf das feststehende Teil oszillierend bewegt wird. Damit eine solche oszillierende Bewegung ermöglicht wird, ist es erforderlich, zwischen dem feststehenden Teil und dem schwingbeweglichen Teil einen Luftspalt vorzusehen.

Durch diesen Luftspalt ist ein Raum gegeben, in dem sich das schwingbewegliche Teil relativ zu dem feststehenden Teil bewegen kann. Allerdings kommt es auch durch die Schwingbewegung zu einer Anregung des Luftvolumens in dem Luftspalt, sodass dadurch unerwünschte hohe Geräusche entstehen. Der Begriff "hoch" bezieht sich dabei nicht nur auf die Frequenz, sondern auch auf den Geräuschpegel, der unerwünscht oder sogar unzulässige Werte annehmen kann. Daher schlägt die Erfindung vor, dass Mittel vorgesehen sind, die die sich in einem Luftspalt zwischen diesen beiden Teilen befindende Luft entfernt. Unter dem Begriff "entfernen" wird verstanden, dass sich Luft in dem Luftspalt befindet, die zum Beispiel abgesaugt wird. Ebenfalls ist darunter zu verstehen, dass Maßnahmen ergriffen werden, die verhindern, dass sich in dem Luftspalt überhaupt ein nennenswertes Luftvolumen bilden kann, welches durch Schwingungen angeregt werden könnte. Außerdem kann darunter verstanden werden, dass der Bereich des Luftspaltes gegenüber der Außenumgebung abgedichtet wird, sodass zwar ein Luftvolumen in dem Luftspalt sich befindet, jedoch aufgrund der Abdichtung entweder nicht zum Schwingen angeregt wird oder, falls doch, durch die Abdichtung die dabei entstehende Geräuscherzeugung wirksam gedämpft wird. Insgesamt lassen sich in vorteilhafter Weise durch die vorstehend beschriebenen Maßnahmen die Geräuschpegel an dem Ort, an dem sie entstehen, entweder deutlich reduzieren oder im besten Falle gänzlich verhindern, sodass damit der Schallpegel der gesamten Vibrationsschweißmaschine bei ihrer Arbeit signifikant reduziert wird, ohne großen Aufwand dafür betreiben zu müssen.

In Weiterbildung der Erfindung sind die Mittel, mit denen die sich in dem Luftspalt befindende Luft entfernt wird, als Abdichtung um den Luftspalt herum ausgebildet. Das bedeutet, dass von dem feststehenden Teil und von dem schwingbeweglichen Teil ein Luftvolumen in dem Luftspalt gebildet wird und genau dieser Bereich, der von den beiden Teilen den Luftspalt bildet, gegenüber der Außenumgebung abgedichtet wird. Daraus folgt, dass sich zwar zwischen den beiden Teilen ein Luftvolumen befindet und in Folge der Bewegung des schwingbeweglichen Teiles auch zum Schwingen angeregt wird, durch die Abdichtung diese Geräusche in vorteilhafter Weise nicht nach außen dringen.

In Weiterbildung der Erfindung sind die Mittel zur Entfernung der sich zwischen dem Luftspalt befindenden Luft als Gehäuse um den Luftspalt herum ausgebildet. Beispielsweise können der schwingbewegliche Teil einschließlich des darum befindlichen feststehenden Teiles durch ein Gehäuse umgeben werden, wobei zwar die Luft in dem Luftspalt aufgrund der Schwingbewegung des beweglichen Teiles angeregt wird, gleichzeitig aber der dabei entstehende Schall nicht an die Außenumgebung abgegeben werden kann. Ein solches Gehäuse kann wesentlich kleiner ausfallen als eine komplette Einhausung der Vibrationsmaschine, sodass dadurch in vorteilhafter Weise der Geräuschpegel mit einfachen Maßnahmen reduziert werden kann. Das Gehäuse kann sehr einfach gestaltet werden, wobei lediglich eine schwingbewegliche, elastische oder dergleichen ausgebildete Abdichtung zwischen dem feststehenden Gehäuse und dem schwingbeweglichen Teil vorgenommen werden muss. Außerdem behindert dieses Gehäuse nicht die Serienherstellung, da lediglich im Wesentlichen der schwingbewegliche Teil von dem Gehäuse umgeben wird, wohingegen dessen Werkzeug, an dem das eine Schweißteil befestigt wird, frei zugänglich ist.

Alternativ oder ergänzend zu der Abdichtung des Bereiches, der den Luftspalt bildet, oder eines zusätzlichen den Luftspalt umgebenden Bereiches ist es denkbar, dass die Mittel als einen Unterdruck erzeugende Mittel ausgebildet sind, womit die sich zumindest in dem Luftspalt befindende Luft abgesaugt wird. Durch einen solchen Unterdruck, der von entsprechenden Mitteln (wie zum Beispiel einer Unterdruckpumpe oder dergleichen) erzeugt wird, kann entweder gezielt das Luftvolumen, welches sich in dem Luftspalt zwischen dem schwingbeweglichen und dem feststehenden Teil befindet, abgesaugt werden. Außerdem ist es denkbar, auch das Luftvolumen um das Luftvolumen, welche sich in de Luftspalt befindet, herum abzusaugen, um zu vermeiden, dass dieses durch die oszillierende Bewegung angeregt und in nachteiliger Weise einen störenden Geräuschpegel erzeugt wird. Außerdem ist es denkbar, entweder den Luftspalt durch eine Dichtung, die nach wie vor die Schwingbewegung zulässt, abzudichten oder das feststehende Teil und das schwingbewegliche Teil durch ein Gehäuse um sie herum abzudichten und gleichzeitig in diesen abgedichteten Bereichen einen Unterdruck zu erzeugen oder auch gezielt dort die sich darin befindenden Luft abzusaugen. In allen Fällen wird wirksam das Luftvolumen, das durch die Schwingbewegung angeregt wird und damit für die negative Geräuschentwicklung verantwortlich ist, reduziert oder vollständig beseitigt, sodass eine Anregung nicht mehr möglich ist und die Geräuschentwicklung signifikant reduziert oder vollständig eliminiert wird.

Gleiches gilt für das Verfahren zum Betreiben einer solchen Vibrationsschweißmaschine. Erfindungsgemäß ist diesbezüglich vorgesehen, dass durch geeignete Verfahrensschritte die sich in dem Luftspalt zwischen dem schwingbeweglichen und dem feststehenden Teil befindende Luft und gegebenenfalls auch die sich darum herum befindende Luft, entfernt wird. Damit wird wirksam vermieden, dass diese Luft, die für eine negative Geräuschentwicklung in Folge der Schwingbewegung verantwortlich ist, einen störenden Geräuschpegel erzeugt. Damit lässt sich auf einfache Art und Weise und mit simplen Verfahrensschritten die negative Geräuschentwicklung vermeiden, wobei gleichzeitig auch eine komplette Einhausung der Vibrationsschweißmaschine zwecks Schallschutzes vermieden werden kann. Außerdem ist insbesondere bei der Serienherstellung von zusammenzufügenden Schweißteilen eine höhere Taktzeit möglich, da es nicht mehr erforderlich ist, zwecks Schweißteilwechsel die komplette Einhausung zu entfernen und anschließend wieder zu installieren. Der Schweißteilwechsel (und gegebenenfalls auch ein Werkzeugwechsel) kann jederzeit erfolgen, ohne dass die komplette Einhausung zwecks Schallschutz entfernt werden muss, weil erfindungsgemäß in vorteilhafter Weise dasjenige Luftvolumen gezielt an der Stelle entfernt wird, an der es vorhanden ist und für einen negativen Geräuschpegel sorgen würde.

Das erfindungsgemäße Prinzip beruht auf einer schnellen linearen Auslenkung eines Schweißkopfes (Schwinger) gegenüber einem starren Tisch (Oberträger bzw. Hubtisch). Die Frequenz beträgt dabei beispielsweise ca. 70 bis 260 Hertz, vorzugsweise 180 bis 240 Hertz, weiter vorzugsweise 200 bis 240 Hz. Die Amplitude geht bis zu 2mm (Schwingweite bis 4 mm), vorzugsweise 1,5 mm (Schwingweite bis 3 mm), weiter vorzugsweise 1 mm (Schwingweite 2 mm).

Es gibt darüber hinaus noch eine so genannte niederfrequente Prozessvariante. Dann ist die Frequenz von 80 bis 130 Hertz, vorzugsweise 100 bis 120 Hertz, die Amplitude bis 2 mm, maximal bis 2,5 mm.

Besonders relevant ist aber zunächst die hochfrequente Variante, da hier die Schallquelle lauter ist.

Der Schwingkopf ist ein Resonanzschwinger mit einem Magnet-Feder-Schwingsystem. Starke Magnete lenken den Kopf aus. Die Feder sorgt für die Rückstellung.

Es hat sich herausgestellt, dass in dem Luftspalt zwischen Schwinger und Magnet eine Haupt-Schallquelle liegt. Hier wird ein großes Luftpolster schnell verdrängt, bzw. angesogen. Dadurch wird die Luftsäule wie ein Lautsprecher bewegt und erzeugt somit einen Großteil der Schallemission (störender Geräuschpegel).

Die Idee, welche der Erfindung zugrunde liegt, ist nun, die Luft aus dem Spalt zu entfernen und somit das schallübertragende Medium bzw. das Medium der Schallentstehung.

Die Lösung ist das Prinzip eines evakuierten Spalts am Schwingkopf zur Vermeidung der Schallentstehung oder zur Verminderung der Schallemission. Das Volumen des Spaltes kann zwecks weiterer Geräuschreduzierung durch Volumenvergrößerung im Bereich des den Spalt umgebenden Bereiches erfolgen, um die Kompressionsrate zu verringern. Die Vergrößerung sind zum Beispiel Bohrungen, Taschen und dergleichen.

Eine andere Lösungsmöglichkeit ist einfach die Erzeugung eines Unterdruckes (Vakuum ist ja auch eine besondere Form des Unterdrucks) bzw. das gezielte Absaugen der entweichenden Luft, damit keine Ausbreitung in alle Richtungen erfolgt, sondern damit die umgebende Luftsäule unbeeinflusst bleibt.

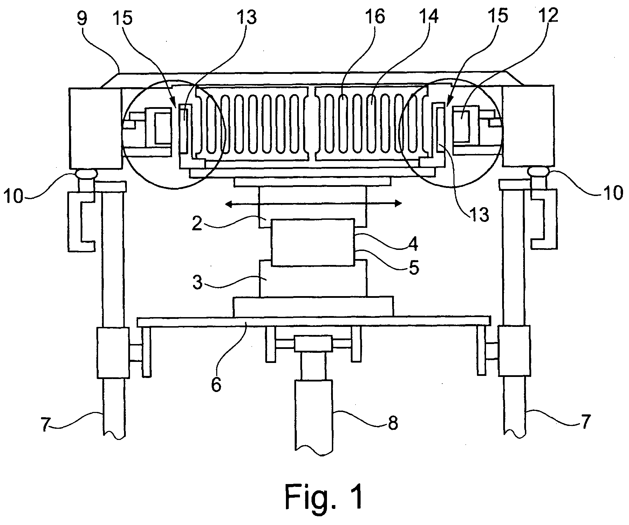

Im Folgenden werden die erfindungsgemäße Vibrationsschweißmaschine sowie das erfindungsgemäße Verfahren anhand einer Prinzipdarstellung in der einzigen Figur weiter erläutert.

Mit 1 ist in einer Prinzipdarstellung eine Vibrationsschweißmaschine gezeichnet, die als schwingbewegliches Teil zumindest ein Oberwerkzeug 2 und als feststehendes Teil zumindest ein Unterwerkzeug 3 umfasst. Mittels dieser beiden Werkzeuge 2, 3 werden zwei Schweißteile 4, 5 gehalten (dort eingespannt oder dergleichen), um sie aufeinanderzuzubewegen und in Vibration zu versetzen. Mittels dieser Vibration wird Reibungswärme im Bereich der entsprechenden Fügezonen der beiden Schweißteile 4, 5 erzeugt, sodass sie dort miteinander zusammengefügt werden und dauerhaft verbunden bleiben, wenn sie aus den beiden Werkzeugen 2, 3 wieder entnommen werden. Vorzugsweise werden als Schweißteile 4, 5 aus entsprechendem Kunststoff vorgefertigte Bauteile eingesetzt und zusammengefügt, wobei es nicht ausgeschlossen ist, dass andere mittels eines Vibrationsschweißvorganges zusammenfügbare Teile aus entsprechenden Bauteilen zur Anwendung kommen. Gegebenenfalls können auch Schweißteile aus einem metallischen Werkstoff eingesetzt werden (Reibschweißvorgang).

Um die beiden Schweißteile 4, 5 in die beiden Werkzeuge 2, 3 einsetzen und bewegen zu können, weist die Vibrationsschweißmaschine 1 weiterhin einen Hubtisch 6 auf, der beispielsweise an Führungssäulen 7 linear bewegbar ist. Diese Bewegung erfolgt mittels eines Tischantriebes 8, beispielsweise einem Elektroantrieb, einem Hydraulikantrieb oder dergleichen. Mittels dieses Hubtisches 6 und seinem Tischantrieb 8 wird es ermöglicht, die beiden Werkzeuge 2, 3 zunächst auseinanderzufahren (in linearer Richtung), um dort die beiden miteinander zu verbindenden Schweißteile 4, 5 in die zugehörigen Werkzeuge 2, 3 einsetzen zu können. Nachdem dies erfolgt ist, fährt der Tischantrieb 8 den Hubtisch 6 bei Betrachtung der Figur nach oben in Richtung des ihm zugewandten Oberwerkzeuges 2 mit dem darin eingespannten Schweißteil 4, sodass die einander zugewandten Fügezonen der beiden Schweißteile 4, 5 in Anlage kommen. Diese lineare Bewegung des Hubtisches 6 kann gegebenenfalls während des Vibrationsschweißvorganges (wie weiter unten beschrieben) nachgeführt werden.

Der schwingbewegliche Teil der Vibrationsmaschine 1 umfasst einen Oberträger 9, der in diesem Fall über eine Lagerung 10, ggf. eine elastische Lagerung, an den Führungssäulen 7 angeordnet ist. Alternativ dazu ist es selbstverständlich denkbar, den Oberträger 9 auch an einer anderen Stelle der Vibrationsschweißmaschine 1 (hier nicht dargestellt) anzuordnen. Wichtig für den Vibrationsschweißvorgang ist eine ortsfeste Anordnung des feststehenden Teiles, hier des Oberträgers 9. Denn relativ zu diesem feststehenden Teil (Oberträger 9) wird ein schwingbeweglicher Teil, hier ein Schwinger 11, angeordnet, wobei an dem Schwinger 11 das Oberwerkzeug 2 zur Aufnahme des einen Schweißteiles 4 angeordnet ist. Der schwingbewegliche Teil, hier der Schwinger 11, wird prinzipiell in eine Schwingbewegung versetzt, wozu entsprechende Antriebsmittel vorhanden sind. Bei der in der Figur gezeigten Vibrationsschweißmaschine 1 sind diese Mittel zur Vibrationserzeugung als Resonanzschwinger mit einem Magnet-Feder-Schwingsystem ausgebildet. Das bedeutet, dass an dem Oberträger 9 zumindest eine Elektromagnetspule 12 (hier 2 gegenüberliegend angeordnete Elektromagnetspulen 12) und an dem Schwinger 11 zumindest ein dementsprechend zugehöriger Magnet 13, hier 2 gegenüberliegend an dem Schwinger 11 außen befestigte Magnete 13, vorhanden sind. Außerdem ist zur Unterstützung des Vibrationsschweißvorganges in dem Schwinger 11 ein Federpaket 14 vorhanden. Dadurch wird der Schwinger 11 bzw. allgemein ein schwingbeweglicher Teil, auch Schwingkopf genannt, gebildet. Damit dieser Schwinger 11 zwischen den Elektromagnetspulen 12 oszillierend hin- und herbewegt werden kann, ist es erforderlich, dass zwischen der jeweiligen Elektromagnetspule 12 (ortsfest) und dem zugehörigen Magneten 13 (beweglich) ein Luftspalt 15 vorhanden ist. Dieser Luftspalt ermöglicht eine Bewegung des Schwingers 11 zwischen den Elektromagnetspulen 12. Dabei hat sich im Betrieb solcher Vibrationsschweißmaschinen 1 herausgestellt, dass sich das in den Luftspalten 15 befindende Luftvolumen aufgrund der Hin- und Herbewegung des Schwingers 11 anregen lässt, wodurch es zu den vorstehend geschilderten nachteiligen störenden Geräuschen kommt. An dieser Stelle setzt die Erfindung an und ermöglicht eine Entfernung des Luftvolumens in den Luftspalt 15 bzw. bei der Ausgestaltung der Vibrationsmaschine 1 gemäß der Figur zwischen den beiden Luftspalten 15. Für den Fall, dass sich herausstellen sollte, dass auch zumindest ein Luftspalt 16, insbesondere mehrere Luftspalte, des Federpaketes 14 durch die oszillierende Bewegung störende Geräusche erzeugen, kann auch dort an die Entfernung des Luftvolumens in diesen Luftspalt bzw. in den mehreren Luftspalten 16 gedacht werden. Die Mittel zur Entfernung des Luftvolumens in dem Luftspalt 15 können als eine Abdichtung genau um den Luftspalt 15 herum ausgebildet sein. Das bedeutet, dass eine beispielsweise elastisch verformbare Dichtung, ein Faltenbalk oder dergleichen zwischen der Elektromagnetspule 12 und dem zugehörigen Magneten 13 herum angeordnet wird. Dadurch wird es ermöglicht, dass sich der Schwinger 11 nach wie vor relativ zu dem Oberträger 9 bewegen kann, gleichzeitig aber auch verhindert wird, dass durch die Anregung des Luftvolumens in dem Luftspalt 15 Geräusche in nachteiliger Weise entstehen. Das heißt, dass in diesem Zusammenhang der Begriff "Entfernen" so zu verstehen ist, dass sich zwar in dem Luftspalt 15 noch Luft befindet, jedoch verhindert wird, dass die angeregte Luft infolge der Schwingbewegung störende Geräusche erzeugt. Gleiches gilt auch für den Fall, dass die Mittel zum Entfernen der Luft als Gehäuse um den Luftspalt 15 herum ausgebildet sind. Das bedeutet, dass beispielsweise um einen größeren Bereich um die Elektromagnetspule 12 und dem zugehörigen Magneten 13 herum ein Gehäuse vorgesehen werden kann, welches eine Abdichtung gegen der äußeren Umgebung bewirkt, um störende Geräusche zu reduzieren oder gänzlich abzuschotten. Darüber hinaus kann auch beispielsweise der gesamte Bereich um den Oberträger 9 herum mit einem Gehäuse gegenüber der übrigen Vibrationsschweißmaschine 1 abgedichtet werden, um eine störende Geräuschentwicklung in diesem Bereich, in dem sich die schwingbeweglichen Teile befinden, zu reduzieren oder zu eliminieren. In einem solchen Fall ist jedoch sicherzustellen, dass das Gehäuse, welches den Oberträger 9 umgibt, einen Ausschnitt aufweist, aus dem das Oberwerkzeug 2 herausragen kann. In diesem Fall ist in vorteilhafter Weise sicherzustellen, dass das Oberwerkzeug 2 gegenüber dem Ausschnitt des Gehäuses ebenfalls durch eine elastische Dichtung, einen Faltenbalk oder dergleichen akustisch abgedichtet wird. Für die vorstehend beschriebenen Varianten kann auch daran gedacht werden, ohne zusätzliche akustische Abdichtungsmaßnahmen die Luft aus dem Luftspalt 15 und ggf. aus Bereichen darum herum dadurch zu entfernen, dass sie gezielt abgesaugt wird oder diese Bereiche in einem Unterdruck betrieben werden.

Insgesamt sieht die Erfindung also vor, dass derjenige Bereich zwischen dem schwingbeweglichen Teil und dem feststehenden Teil der Vibrationsschweißmaschine, in dem infolge der Schwingbewegung störende Geräusche entstehen, durch entsprechende Maßnahmen akustisch gegen der äußeren Umgebung abgedichtet werden. Hierunter fallen sowohl mechanische Vorrichtungen (wie zum Beispiel das beschriebene Gehäuse) als auch die Entfernung des Luftvolumens zumindest in dem Luftspalt (oder ggf. darum herum) durch absaugende Maßnahmen oder durch Unterdruck.

Ergänzend dazu kann unterstützend daran gedacht werden, dass die gesamte Vibrationsschweißmaschine mit Unterdruck betrieben wird, woraus resultiert, dass in dem Luftspalt kein Luftvolumen oder kein nennenswertes Luftvolumen vorhanden ist, welches infolge der Vibrationsschweißung störende Geräusche erzeugen könnte.

### Bezugszeichenliste

- 1.: Vibrationsschweißmaschine
- 2.: Oberwerkzeug
- 3.: Unterwerkzeug
- 4.: Schweißteil
- 5.: Schweißteil
- 6.: Hubtisch
- 7.: Führungssäule
- 8.: Tischantrieb
- 9.: Oberträger
- 10.: Lagerung
- 11.: Schwinger
- 12.: Elektromagnetspule
- 13.: Magnet
- 14.: Federpaket
- 15.: Luftspalt
- 16.: Luftspalt

## Patentansprüche

1. Vibrationsschweißmaschine (1), aufweisend ein Oberwerkzeug (2) und ein Unterwerkzeug (3), wobei die beiden Werkzeuge (2, 3) jeweils ein Schweißteil (4, 5) aufnehmen, die mittels Vibration zusammengefügt werden sollen, und Mittel zur Vibrationserzeugung vorgesehen sind, die zumindest das Oberwerkzeug (2) in Vibration versetzen, wobei die Mittel zur Vibrationserzeugung als ein feststehender Teil, insbesondere einem Oberträger (9), und einem daran schwingbeweglich angeordneten Teil, insbesondere einem Schwinger(11), der das Oberwerkzeug (2) aufnimmt, ausgebildet sind, **dadurch gekennzeichnet, dass** weiterhin Mittel vorgesehen sind, die die sich in einem zwischen dem feststehenden Teil, insbesondere dem Oberträger (9), und dem schwingbeweglichen Teil, insbesondere dem Schwinger (11), gebildeten Luftspalt (15) befindende Luft entfernen.

2. Vibrationsschweißmaschine (1) nach Anspruch 1, **dadurch gekennzeichnet, dass** die Mittel als Abdichtung um den Luftspalt (15) herum ausgebildet sind.

3. Vibrationsschweißmaschine (1) nach Anspruch 1, **dadurch gekennzeichnet, dass** die Mittel als Gehäuse um den Luftspalt (15) herum ausgebildet sind.

4. Vibrationsschweißmaschine (1) nach Anspruch 1, **dadurch gekennzeichnet, dass** die Mittel als einen Unterdruck erzeugende Mittel ausgebildet sind, womit zumindest die sich in dem Luftspalt (15) befindende Luft abgesaugt wird.

5. Vibrationsschweißmaschine (1) nach einem der vorhergehenden Ansprüche, **dadurch gekennzeichnet, dass** die Mittel zur Vibrationserzeugung als Resonanzschwinger mit einem Magnet-Feder-Schwingsystem ausgebildet sind.

6. Vibrationsschweißmaschine (1) nach Anspruch 5, **dadurch gekennzeichnet, dass** das Magnet-Feder-Schwingsystem zumindest eine an dem Oberträger (9) angeordnete Elektromagnetspule (12) und einen damit zusammenwirkenden an dem Schwinger (11) angeordneten Magneten (13) umfasst.

7. Verfahren zum Betreiben einer Vibrationsschweißmaschine (1), aufweisend ein Oberwerkzeug (2) und ein Unterwerkzeug (3), wobei die beiden Werkzeuge (2, 3) jeweils ein Schweißteil (4, 5) aufnehmen, die mittels Vibration zusammengefügt werden sollen, und Mittel zur Vibrationserzeugung vorgesehen sind, die zumindest das Oberwerkzeug (2) in Vibration versetzen, wobei die Mittel zur Vibrationserzeugung als ein feststehender Oberträger (9) und einem daran schwingbeweglich angeordneten Schwinger(11), der das Oberwerkzeug (2) aufnimmt, ausgebildet sind, **dadurch gekennzeichnet, dass** weiterhin die sich in einem zwischen dem Oberträger (9) und dem Schwinger (11) gebildeten Luftspalt (15) befindende Luft entfernt wird.

8. Verfahren nach Anspruch 7, **dadurch gekennzeichnet, dass** die sich in dem Luftspalt (15) befindende Luft abgesaugt wird.

9. Verfahren nach Anspruch 7, **dadurch gekennzeichnet, dass** zumindest der Bereich, in dem sich der Oberträger (9) mit dem Schwinger (11) befindet, eingehaust wird und in dem Bereich der Einhausung ein Unterdruck erzeugt wird.

10. Verfahren nach Anspruch 7, **dadurch gekennzeichnet, dass** die gesamte Vibrationsschweißmaschine (1) in einem Unterdruck betrieben wird.

## Claims

1. A vibration welder (1), comprising a top tool (2) and a bottom tool (3) holding respective welding parts (4, 5) to be joined together by vibration, and vibration generating means that set at least the top tool (2) in vibration, wherein the vibration generating means include a fixed part, in particular a top beam (9), and a part arranged in an oscillatingly movable manner thereon, in particular an oscillator (11) that receives the top tool (2), **characterized in that**, furthermore, means that remove the air present in an air gap (15) formed between the fixed part, in particular the top beam (9), and the oscillatingly movable part, in particular the oscillator (11), are provided.

2. The vibration welder (1) as claimed in claim 1, **characterized in that** the means are configured as a seal around the air gap (15).

3. The vibration welder (1) as claimed in claim 1, **characterized in that** the means are configured as a housing around the air gap (15).

4. The vibration welder (1) as claimed in claim 1, **characterized in that** the means are configured as underpressure-generating means that extract the air present at least in the air gap (15).

5. The vibration welder (1) as claimed in one of the preceding claims, **characterized in that** the vibration generating means are configured as resonance oscillators having a magnet-spring oscillation system.

6. The vibration welder (1) as claimed in claim 5, **characterized in that** the magnet-spring oscillation system comprises at least one electromagnetic coil (12) arranged on the top beam (9) and a therewith cooperating magnet (13) arranged on the oscillator (11).

7. A method of operating a vibration welder (1) having a top tool (2) and a bottom tool (3) adapted to hold respective welding parts (4, 5) to be joined together by vibration, and vibration generating means that set at least the top tool (2) in vibration, wherein the vibration generating means include a fixed top beam (9) and an oscillator (11) arranged in an oscillatingly movable manner thereon and carrying the top tool (2), **characterized in that**, furthermore, the air present in an air gap (15) formed between the top beam (9) and the oscillator (11) is removed.

8. The method as claimed in claim 7, **characterized in that** the air present in the air gap (15) is extracted.

9. The method as claimed in claim 7, **characterized in that** at least the region in which is found the top beam (9) with the oscillator (11) is encased, and in the region of the encasement a subatmospheric pressure is generated.

10. The method as claimed in claim 7, **characterized in that** the entire vibration welder (1) is operated in a subatmospheric pressure.

## Revendications

1. Machine de soudure par vibrations (1), comprenant un outil supérieur (2) et un outil inférieur (3), les deux outils (2, 3) logeant chacun une pièce à souder (4, 5), qui doivent être assemblées entre elles à l'aide de vibrations, et des moyens pour la génération de vibrations sont prévus, qui font vibrer au moins l'outil supérieur (2), les moyens pour la génération de vibrations étant conçus comme une partie fixe, plus particulièrement un support supérieur (9), et une partie disposée de façon à être mobile de manière oscillante par rapport à celle-ci, plus particulièrement un oscillateur (11), qui loge l'outil supérieur (2), **caractérisée en ce que** des moyens sont en outre prévus, qui évacuent l'air se trouvant dans un interstice (15) formé entre la partie fixe, plus particulièrement le support supérieur (9), et la partie oscillante, plus particulièrement l'oscillateur (11).

2. Machine de soudure par vibrations (1) selon la revendication 1, **caractérisée en ce que** les moyens sont conçus comme un dispositif d'étanchéité autour de l'interstice (15).

3. Machine de soudure par vibrations (1) selon la revendication 1, **caractérisée en ce que** les moyens sont conçus comme un boîtier autour de l'interstice (15).

4. Machine de soudure par vibrations (1) selon la revendication 1, **caractérisée en ce que** les moyens sont conçus comme des moyens générant une dépression, ce qui permet d'aspirer au moins l'air se trouvant dans l'interstice (15).

5. Machine de soudure par vibrations (1) selon l'une des revendications précédentes, **caractérisée en ce que** les moyens pour la génération de vibrations sont conçus en tant qu'oscillateurs à résonance avec un système oscillant aimant-ressort.

6. Machine de soudure par vibrations (1) selon la revendication 5, **caractérisée en ce que** le système oscillant aimant-ressort comprend au moins une bobine électromagnétique (12) disposée sur le support supérieur (9) et un aimant (13) interagissant avec celle-ci et disposé sur l'oscillateur (11).

7. Procédé d'utilisation d'une machine de soudure par vibrations (1), comprenant un outil supérieur (2) et un outil inférieur (3), les deux outils (2, 3) logeant chacun une pièce à souder (4, 5), qui doivent être soudées à l'aide de vibrations, et des moyens pour la génération de vibrations sont prévus, qui font vibrer au moins l'outil supérieur (2), les moyens de génération de vibrations étant conçus comme un support supérieur (9), et un oscillateur (11) disposé sur celui-ci de façon à osciller, qui loge l'outil supérieur (2), **caractérisée en ce qu'**en outre l'air se trouvant dans un interstice (15) formé entre le support supérieur (9) et l'oscillateur (11) soit évacué.

8. Procédé selon la revendication 7, **caractérisé en ce que** l'air se trouvant dans l'interstice (15) est aspiré.

9. Procédé selon la revendication 7, **caractérisé en ce qu'**au moins la partie dans laquelle le support supérieur (11) se trouve avec le support supérieur (9), est entourée d'une enceinte et une dépression est générée à l'intérieur de cette enceinte.

10. Procédé selon la revendication 7, **caractérisé en ce que** l'ensemble de la machine de soudure par vibrations (1) est utilisée dans une dépression.
